# EUROPEAN PATENT SPECIFICATION

(11) **EP 1 335 802 B1**
(45) Date of publication and mention of the grant of the patent: **10.11.2004**
(21) Application number: 01997367.6
(22) Date of filing: 20.11.2001
(51) Int. Cl.: B08B 15/00, B60K 13/04

(54) **SAFETY COUPLING**
SICHERHEITSKUPPLUNG
COUPLAGE DE SECURITE

(30) Priority: 22.11.2000 SE 0004278
(43) Date of publication of application: 20.08.2003
(73) Proprietor: PLYMOVENT AB, 921 28 Lycksele (SE)
(72) Inventor: SJÖBERG, Krister, S-921 92 Lycksele (SE)
(74) Representative: Winblad, Hans Peter
(86) International application number: PCT/SE2001/002560
(87) International publication number: WO 2002/042015

(56) References cited:
- DE-A1- 19 622 860
- US-A- 5 453 048
- US-A- 5 609 298
- US-A- 5 679 072
- PATENT ABSTRACTS OF JAPAN & JP 11 159 626 A (MECS CORP) 15 June 1999

## Description

The invention relates to a safety coupling according to the preamble of patent claim 1 and to an exhaust gas evacuation device according to the preamble of patent claim 21. Advantageous refinements and developments of the invention are set out in the dependent patent claims and in the description with attached drawing.

It is advantageous to use a flexible line, e.g. a hose, a pipe or a tube, to connect the exhaust pipe of a motor vehicle to an exhaust gas evacuation device during driving in assembly areas, inspection areas, garages, parking areas for emergency vehicles, etc.

In exhaust gas evacuation lines, for example for emergency vehicles, a safety coupling of the abovementioned type is already known. When the vehicle sets out in the event of an alarm, said vehicle pulls the suction hose behind it until the vehicle is outside the garage, at which point the hose is automatically released from the vehicle's exhaust pipe. The same principle is applied at the premises of Svensk Bilprovning (Swedish Motor Vehicle Inspection). If, for example, the hose catches on something before the vehicle has reached the position where the hose is automatically released, or if there is a defect in the release mechanism, the tensile force in the suction hose may very quickly increase. When the force reaches a predetermined threshold value, the safety coupling divides and thus prevents personal injuries and also prevents damage to the suction hose or other equipment.

In a conventional safety coupling of the abovementioned type, which is made up of two coupling halves provided with flanges, the coupling halves are held together by a rubber sleeve surrounding the flanges. In this case, the function of the safety coupling is dependent on the design of the flanges and also on the material from which the sleeve is made, and also its design, when determining the value of the tensile force at which it is desirable that the coupling should divide. Thus, for a safety coupling made of a given material and with a given design, it is possible to obtain division of the coupling halves at just one predetermined value of the tensile force in the suction hose. However, depending on the environmental requirements or vehicle type, it can be advantageous to be able to vary the force of release of the safety coupling without having to produce a completely new coupling variant for this purpose.

A previously known exhaust gas evacuation device equipped with a slotted suction channel on which a carriage can be moved is already known from DE-A1 196 22 860. The carriage can be connected to the exhaust pipe of a motor vehicle via a suction hose and a clamping device. The clamping device can be opened by means of a Bowden cable leading to the carriage. To prevent damage in the part with the vehicle's exhaust pipe and to avoid personal injuries, the exhaust gas hose and the Bowden cable are each provided with a safety coupling which can be released when a force is exceeded which is greater than the preset force required to correctly open the clamping device. If the clamping device is not opened in the correct way, or if the Bowden cable or exhaust sleeve gets caught on the vehicle, the safety coupling comes into action. Both the exhaust gas hose and the Bowden cable are divided in two by the respective safety coupling. This entails a relatively complicated construction with consequent adjustment difficulties. Since the Bowden cable with its safety coupling is situated inside the exhaust gas hose, its function can additionally be compromised by fouling.

The object of the present invention is therefore to make available a device which can be adapted to different exhaust gas evacuation devices, vehicles and environmental requirements in a simpler, more reliable and more cost-effective way than before.

This is made possible with a safety coupling and an exhaust gas evacuation device according to the characterizing features of patent claims 1 and 21. Advantageous developments and refinements are set out in the description and in the dependent patent claims.

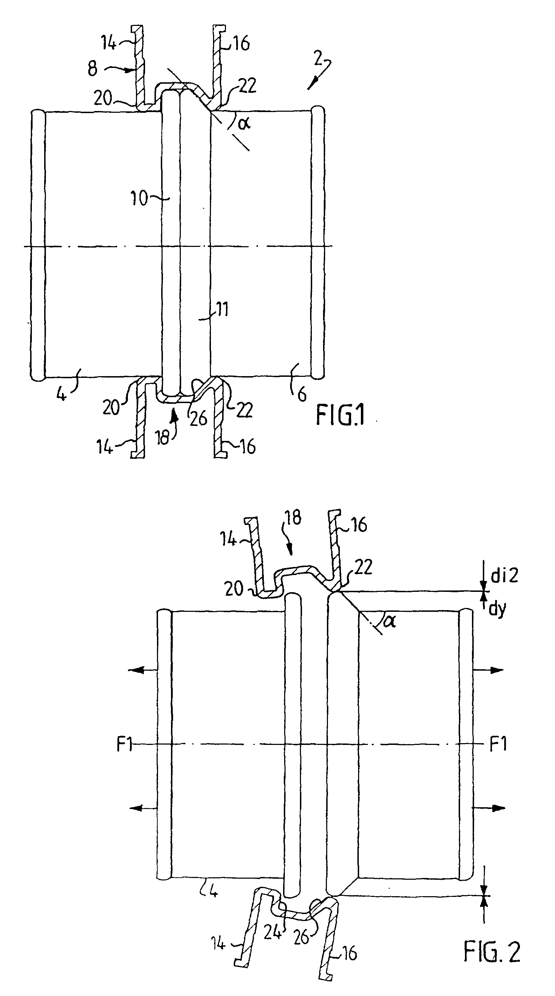

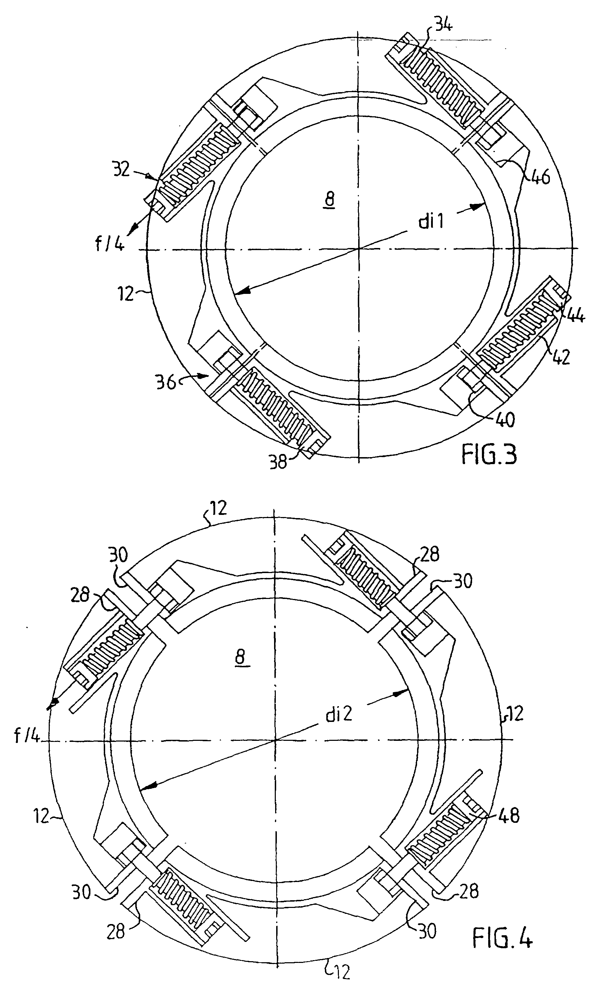

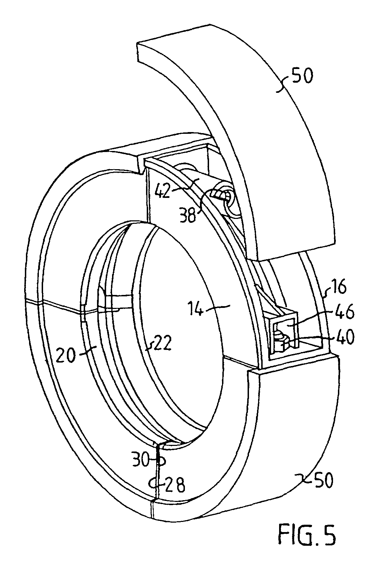

The embodiments of the invention are shown on the attached diagrammatic drawing only by way of example and are explained in greater detail in the description which follows. Fig. 1 shows a safety coupling according to the invention with the locking ring mounted and shown in a cutaway view, without the spring arrangement in its starting position, Fig. 2 shows the safety coupling from Fig. 1, but with the locking ring in its release position, Fig. 3 shows a partially cutaway plan view of the locking ring with its sections and the spring arrangement in the starting position and with the coupling halves removed, Fig. 4 shows the locking ring from Fig. 3 in its release position, and Fig. 5 shows a perspective view of the locking ring from Fig. 3 with protective covers mounted in sections.

Figures 1 and 2 show an embodiment of a safety coupling 2 for a flexible line (not shown), which safety coupling is designed as a tubular, two-part flange joint with a first coupling half 4, a second coupling half 6 and a resilient locking ring 8. The first coupling half has a flange portion provided with a straight flange 10, and the second coupling half has a flange portion provided with a conical flange 11, which flanges preferably have the same external diameter dy. The conical flange 11 can assume cone angles α in a range of 30-60°. Tests have shown that a value of 45° is advantageous for ensuring a reliable function of the safety coupling.

The coupling halves can be joined together via the flanges by means of the resilient locking ring 8 which has an internal shape complementing the flange portions of the coupling halves and thus provides a form-fit connection with the flanges 10, 11 when it is mounted on these. For this purpose, the locking ring 8 has spring-loaded parts in the form of ring segments 12 which are movable relative to one another and which are each equipped in the radial direction with a first limb or ring side 14 and a second limb or ring side 16 which have free outer edges and which, along their inner edges, are connected to one another by a web 18 which is arched outward in part. The inner shape of the locking ring complementing the flange portions of the coupling halves has been obtained by virtue of the fact that the profile of the web 18, by being arched outward, includes, together with the respective inner edge of each ring side 14, 16, inwardly directed first 20 and second 22 coupling members. The profile of the web 18 adjoining the inner edge of the first ring side 14 thus forms, together with the latter, the first coupling member 20, and, the profile of the web 18 adjoining the inner edge of the second ring side 16 thus forms, together with the latter, the second coupling member 22. The first coupling member preferably consists of a first annular bead 20, and the second coupling member preferably consists of a second annular bead 22. The first annular bead 20 has a straight edge 24 corresponding to the straight flange 10 of the first coupling half, while the second annular bead 22 has a beveled edge 26 corresponding to the conical flange 11 of the second coupling half.

Figure 3 shows a partially cutaway plan view of an embodiment of the resilient locking ring 8 in the starting position and with the coupling halves removed, and Fig. 4 shows the locking ring from Fig. 3 in the release position. The locking ring 8 can be made up of three or more ring segments which are preferably mutually identical. According to the embodiment shown, the locking ring has four identical ring segments 12, as this has been found to be advantageous both for the functional properties and for the production process. Each ring segment 12 shows in a cutaway view the previously described elements with reference numbers 14-26 and additionally has a first 28 and a second 30 radially extending end wall. The locking ring 8 also has a spring arrangement 32 with resilient elements, which arranegment is designed, with a prestressing force f, to press the ring segments together to a first position in which the locking ring has a surrounding internal diameter di1 which is smaller than the external diameter dy of the conical flange 11.

The spring arrangement 32 can comprise one or more resilient elements 34 which have an adjustment device 36 by means of which the prestressing force f can be adjusted. The resilient element can be made up of a rubber shock absorber, a helical spring designed as tension spring or compression spring 34 or the like, and the adjustment device advantageously comprises a tightening screw 38. The ring segments 12 are preferably joined together by virtue of the tightening screw 38 being arranged to run through the compression spring 34, the first end wall 28 and the second end wall 30 of adjoining ring segments, and by means of a nut 40 arranged on the tightening screw. Arranged on the inside of the first end wall 28 there is a sleeve 42 which accommodates the tightening screw 38 with the applied compression spring 34 which is tensioned between the first end wall 28 and a screw head 44 of the tightening screw.

The nut 40 which is arranged on the inside of the second end wall 30 is accommodated in a rotationally fixed manner in a recess 46 in which the flanks of the nut have a form-fit. The radially outer part 48 of the sleeve is shortened, which means that it is easy to access the screw head for adjustments, while at the same time the position of the screw head 44 in the sleeve 42 is easy to determine, which facilitates a uniform prestressing of the respective adjustment device 36.

To protect the spring arrangement 32 of the safety coupling and also other equipment which may come into contact with the safety coupling 2, each segment 12 has a protective cover 50 of soft material, for example rubber or plastic, which can be snap-fitted onto the free outer edges of the ring sides 14, 16.

The safety coupling 2 has the following function. When the locking ring 8 is mounted on the flanges 10, 11 and its segments 12 are prestressed to the first position in which the surrounding diameter has a starting value di1, and the coupling halves 4, 6 are loaded with a tensile force F, the oblique edge of the conical flange 11 of the second coupling half 6 gives rise, because of a wedge effect, to radially acting force components (not shown). When the sum of these radial force components exceeds the combined force of the prestressed compression springs 34, the segments 12 will separate, which means that the surrounding diameter di increases from its starting value dil. If the tensile force increases to a predetermined value F1, the segments 12 will separate to a second position in which the- surrounding diameter di2 is equal to the diameter dy of the second coupling half 6 across the flange, and the safety coupling divides. Since the first coupling half 4 has a straight flange 10 and the second coupling half 11 has a conical flange, the spring-loaded locking ring 8 will remain on the first coupling half when the coupling divides. It is therefore advantageous, for example in an exhaust gas evacuation device for motor vehicles, to connect the first coupling half 10 to the suction hose of the evacuation channel and the second coupling half to one end of a short suction hose, ca. 1 m in length, whose other end is connected to the clamping device which can be connected to the exhaust pipe of the motor vehicle.

In the present case, it can be advantageous to arrange a seal (not shown) made of suitable sealing material on the mutually adjoining ring surfaces of one or both flanges 10, 11 of the respective coupling half 4, 6. Although the spring arrangement in the illustrated example has four adjustable resilient elements 34, the same can also consist of a single resilient element which is designed as a tension spring or rubber shock absorber which is tensioned about the circumference of the locking ring 8. The segments 12 of the locking ring can be of any suitable hard plastic material, the coupling halves of pressed steel, and the spring elements of a conventional type.

By means of the invention it is thus possible to make available a safety coupling which releases in a reliable manner and which can be adjusted with simple tools, for example a screwdriver, to obtain the desired release force.

## Claims

1. A safety coupling (2) for a flexible line, designed as a tubular, two-part flange joint with a first coupling half (4) and a second coupling half (6), which coupling halves have flange parts each with a flange (10, 11) and are joined together via the flanges by means of a resilient locking ring (8), **characterized in that** the flanges and the locking ring have at least one mutual contact surface (11, 26) which is conical, **in that** the locking ring has segments (12) which are movable relative to one another and whose radial cross sections are designed with inwardly directed coupling members (20, 22) arranged at a distance from one another, and which segments (12), by means of the prestressing force (f) of a spring arrangement (32), are each resiliently prestressed to a first position in which the coupling members (20, 22) straddle the flanges (10, 11), and **in that** the flanges are separable by means of the fact that, when a tensile force (F1) acts on the coupling, the segments (12) of the locking ring can be displaced by a wedge effect counter to the prestressing force (f) to a second position in which the surrounding internal diameter (di) of the locking ring (8) corresponds at least to the external diameter (dy) of one flange and the coupling (2) divides.

2. The safety coupling as claimed in claim 1, **characterized in that** the coupling (2) divides when a predetermined tensile force (F1) on the line is exceeded.

3. The safety coupling as claimed in claim 2, **characterized in that** the magnitude of the predetermined tensile force (F1) is dependent on the magnitude of the prestressing force (f) of the spring arrangement (32) of the locking ring (8).

4. The safety coupling as claimed in claim 3, **characterized in that** the spring arrangement (32) of the locking ring has at least one resilient element (34) which generates the prestressing force (f).

5. The safety coupling as claimed in claim 4, **characterized in that** the resilient element (34) is equipped with an adjustment device (36) by means of which the prestressing force (f) can be adjusted.

6. The safety coupling as claimed in claim 4 or 5, **characterized in that** the resilient element (34) is a rubber shock absorber.

7. The safety coupling as claimed in claim 4 or 5, **characterized in that** the resilient element (34) is a tension spring.

8. The safety coupling as claimed in claim 4 or 5, **characterized in that** the resilient element (34) is a compression spring.

9. The safety coupling as claimed in any of claims 5 through 8, **characterized in that** the adjustment device (36) has a tightening screw (38) for adjusting the prestressing force.

10. The safety coupling as claimed in any of the preceding claims, **characterized in that** both the first and second coupling halves (4, 6) are provided with a straight flange.

11. The safety coupling as claimed in any of claims 1 through 10, **characterized in that** both the first and second coupling halves (4, 6) are provided with a conical flange.

12. The safety coupling as claimed in any claims 1 through 10, **characterized in that** the first coupling half (4) is provided with a straight flange (10) and the second coupling half (6) is provided with a conical flange (11).

13. The safety coupling as claimed in any of the preceding claims, **characterized in that** the locking ring (8) has a shape complementing the flange parts of the coupling halves (4, 6).

14. The safety coupling as claimed in any of the preceding claims, **characterized in that** the locking ring (8) has at least three mutually movable segments (12).

15. The safety coupling as claimed in claim 14, **characterized in that** the locking ring (8) has four mutually movable segments (12).

16. The safety coupling as claimed in any of claims 5 through 15, **characterized in that** the spring arrangement (32) comprises adjustable resilient elements (34) acting between adjoining ends of the mutually movable segments (12) of the locking ring (8).

17. The safety coupling as claimed in claim 16, **characterized in that** each resilient element (34) is arranged to act tangentially between two ring segments (12).

18. The safety coupling as claimed in any of the preceding claims, **characterized in that** when the segments (12) of the locking ring have assumed the first position, the coupling members (20, 22) straddle the flanges (10, 11) so as to bear in a form-fit against the flange parts of the coupling halves (4, 6).

19. The safety coupling as claimed in claim 18, **characterized in that** the coupling members consist of a first annular bead (20) with straight edge (24) and a second annular bead (22) with beveled edge (26).

20. The safety coupling as claimed in claim 19, **characterized in that** the annular beads (20, 22) are connected to one another by means of a web (18).

21. An exhaust gas evacuation device for motor vehicles, with an evacuation channel comprising a flexible line in the form of a suction hose which can be connected to the motor vehicle's exhaust pipe with the aid of a clamp arrangement which can be maneuvered between an active position and an inactive position depending on the position of the motor vehicle relative to the evacuation channel, **characterized in that** the suction hose can be divided by means of a safety coupling (2) which has the features set out in any of the preceding patent claims.

## Patentansprüche

1. Sicherheitskupplung (2) für eine flexible Leitung, ausgebildet als rohrförmige, zweiteilige Flanschverbindung mit einer erstzen Kupplungshälfte (4) und einer zweiten Kupplungshälfte (6), wobei die Kupplungshälften Flanschteile mit jeweils einem Flansch (10, 11) aufweisen und über die Flansche mittels eines nachgiebigen Verschlußrings (8) miteinander verbunden sind, **dadurch gekennzeichnet, dass** die Flansche und der Verschlußring mindestens eine gemeinsame, konisch ausgebildete Kontaktfläche aufweisen (11, 26), dass der Verschlußring Segmente (12) aufweist, die relativ zu einander bewegbar sind und deren radiale Querschnitte nach innen gerichtete Kupplungsorgane (20, 22) aufweisen, die im Abstand voneinander angeordnet sind und die, durch eine mittels einer Federanordnung (32) erzeugte Vorspannung (f), nachgiebig in eine erste Stellung vorgespannt sind, in der die Kupplungsorgane-(20, 22) die Flansche (10, 11) überspannen, und dass die Flansche durch die Tatsache voneinander trennbar sind, dass beim Einwirken einer Zugkraft (F1) auf die Kupplung die Segmente (12) des Verschlußrings entgegen der Vorspannkraft (f) durch einen Keileffekt in eine zweite Stellung bewegbar sind, in der der umgebende Innendurchmesser (di) des Verschlußrings (8) mindestens dem Außendurchmesser (dy) eines der Flansche entspricht und die Kupplung (2) sich trennt.

2. Sicherheitskupplung nach Anspruch 1, **dadurch gekennzeichnet, dass** die Kupplung (2) öffnet, wenn eine vorbestimmte, auf die Leitung wirkende Zugkraft (F1) überschritten wird.

3. Sicherheitskupplung nach Anspruch 2, **dadurch gekennzeichnet, dass** die Größe der vorbestimmten Zugkraft (F1) von der Größe der Vorspannkraft (f) der Federanordnung (32) des Verschlußrings (8) abhängig ist.

4. Sicherheitskupplung nach Anspruch 3, **dadurch gekennzeichnet, dass** die Federanordnung (32) des Verschlußrings mindestens ein nachgiebiges Element (34) aufweist, das die Vorspannkraft (f) erzeugt.

5. Sicherheitskupplung nach Anspruch 4, **dadurch gekennzeichnet, dass** das nachgiebige Element (34) mit einer Einstelleinrichtung (36) versehen ist, mittels der die Vorspannkraft (f) einstellbar ist.

6. Sicherheitskupplung nach Anspruch 4 oder 5, **dadurch gekennzeichnet, dass** das nachgiebige Element (34) ein Gummistoßdämpfer ist.

7. Sicherheitskupplung nach Anspruch 4 oder 5, **dadurch gekennzeichnet, dass** das nachgiebige Element (34) eine Zugfeder ist.

8. Sicherheitskupplung nach Anspruch 4 oder 5, **dadurch gekennzeichnet, dass** das nachgiebige Element (34) eine Druckfeder ist.

9. Sicherheitskupplung nach einem der Ansprüche 5 bis 8, **dadurch gekennzeichnet, dass** die Einstelleinrichtung (36) eine Spannschraube (38) zum Einstellen der Vorspannkraft aufweist.

10. Sicherheitskupplung nach einem der vorangehenden Ansprüche, **dadurch gekennzeichnet, dass** sowohl die erste wie auch die zweite Kupplungshälfte (4, 6) mit einem geraden Flansch versehen ist.

11. Sicherheitskupplung nach einem der Ansprüche 1 bis 9, **dadurch gekennzeichnet, dass** sowohl die erste wie auch die zweite Kupplungshälfte (4, 6) mit einem konischen Flansch versehen ist.

12. Sicherheitskupplung nach einem der Ansprüche 1 bis 9, **dadurch gekennzeichnet, dass** die erste Kupplungshälfte (4) mit einem geraden Flansch (10) und die zweite Kupplungshälfte (6) mit einem konischen Flansch (11) versehen ist.

13. Sicherheitskupplung nach einem der vorangehenden Ansprüche, **dadurch gekennzeichnet, dass** der Verschlußring (8) eine zu den Flanschteilen der Kupplungshälften (4, 6) komplementäre Form aufweist.

14. Sicherheitskupplung nach einem der vorangehenden Ansprüche, **dadurch gekennzeichnet, dass** der Verschlußring (8) mindestens drei gemeinsam bewegbare Segmente (12) aufweist.

15. Sicherheitskupplung nach Anspruch 14, **dadurch gekennzeichnet, dass** der Verschlußring (8) vier gemeinsam bewegbare Segmente (12) aufweist.

16. Sicherheitskupplung nach einem der Ansprüche 5 bis 15, **dadurch gekennzeichnet, dass** die Federanordnung (32) einstellbare, nachgiebige Elemente (34) aufweist, die zwischen benachbarten Enden der gemeinsam bewegbaren Segmente (12) des Verschlußrings (8) wirken.

17. Sicherheitskupplung nach Anspruch 16, **dadurch gekennzeichnet, dass** jedes nachgiebige Element (34) derart angeordnet ist, dass es tangential zwischen zwei Ringsegmenten (12) wirkt.

18. Sicherheitskupplung nach einem der vorangehenden Ansprüche, **dadurch gekennzeichnet, dass**, wenn die Segmente (12) des Verschlußrings die erste Stellung eingenommen haben, die Kupplungsorgane (20, 22) die Flansche (10, 11) derart überspannen, dass sie formschlüssig an den Flanschteilen der Kupplungshälften (4, 6) anliegen.

19. Sicherheitskupplung nach Anspruch 18, **dadurch gekennzeichnet, dass** die Kupplungsorgane aus einem ersten ringförmigen Wulst (20) mit geradem Rand (24) und einem zweiten ringförmigen Wulst (22) mit einem angeschrägten Rand (26) bestehen.

20. Sicherheitskupplung nach Anspruch 19, **dadurch gekennzeichnet, dass** die ringförmigen Wulste (20, 22) mittels eines Stegs (18) miteinander verbunden sind.

21. Vorrichtung zur Abgasentsorgung für Kraftfahrzeuge, mit einem Entsorgungskanal, der eine flexible Leitung in Form einer Saugleitung aufweist, die mit Hilfe einer in Abhängigkeit von der Stellung des Kraftfahrzeugs relativ zu dem Entsorgungskanal zwischen einer aktiven Stellung und einer inaktiven Stellung manövrierbaren Klemmeinrichtung mit dem Auspuff des Kraftfahrzeugs verbindbar ist, **dadurch gekennzeichnet, dass** die Saugleitung mittels einer Sicherheitskupplung (2) mit den Merkmalen eines der vorangehenden Ansprüche teilbar ist.

## Revendications

1. Accouplement de sécurité (2) pour ligne flexible; conçu sous la forme d'un joint à bride tubulaire en deux parties comportant une première moitié d'accouplement (4) et une deuxième moitié d'accouplement (6), lesquelles moitiés d'accouplement ont des parties de bride ayant chacune une bride (10, 11) et sont reliées via les brides au moyen d'une bague de blocage élastique (8), **caractérisé en ce que** les brides et la bague de blocage ont au moins une surface de contact mutuel (11, 26) qui est conique, **en ce que** la bague de blocage comporte des segments (12) qui sont mobiles les uns par rapport aux autres et dont les sections transversales présentent des éléments d'accouplement dirigés vers l'intérieur (20, 22) placés à une certaine distance les uns des autres, et lesquels segments (12), grâce à la force de précontrainte (f) d'un agencement de ressorts (32), sont précontraints chacun jusqu'à une première position dans laquelle les éléments d'accouplement (20, 22) enfourchent les brides (10, 11), et **en ce que** les brides sont séparables par le fait que, lorsqu'une force de traction (F1) agit sur l'accouplement, les segments (12) de la bague de blocage peuvent être déplacés par un effet de coin contre la force de précontrainte (f) jusqu'à une seconde position dans laquelle le diamètre intérieur environnant (di) de la bague de blocage (8) correspond au moins au diamètre extérieur (dy) d'une bride et l'accouplement (2) se divise.

2. Accouplement de sécurité selon la revendication 1, **caractérisé en ce que** l'accouplement (2) se divise lorsqu'une force de traction prédéterminée (F1) exercée sur la ligne est dépassée.

3. Accouplement de sécurité selon la revendication 2, **caractérisé en ce que** l'amplitude de la force de traction prédéterminée (F1) dépend de l'amplitude de la force de précontrainte (f) de l'agencement de ressorts (32) de la bague de blocage (8).

4. Accouplement de sécurité selon la revendication 3, **caractérisé en ce que** l'agencement de ressorts (32) de la bague de blocage comporte au moins un élément élastique (34) qui produit la force de précontrainte (f).

5. Accouplement de sécurité selon la revendication 4, **caractérisé en ce que** l'élément élastique (34) est pourvu d'un dispositif de réglage (36) au moyen duquel la force de précontrainte (f) peut être ajustée.

6. Accouplement de sécurité selon la revendication 4 ou 5, **caractérisé en ce que** l'élément élastique (34) est un amortisseur en caoutchouc.

7. Accouplement de sécurité selon la revendication 4 ou 5, **caractérisé en ce que** l'élément élastique (34) est un ressort de rappel.

8. Accouplement de sécurité selon la revendication 4 ou 5, **caractérisé en ce que** l'élément élastique (34) est un ressort de compression.

9. Accouplement de sécurité selon l'une quelconque des revendications 5 à 8, **caractérisé en ce que** le dispositif de réglage (36) comporte une vis de serrage (38) permettant de régler la force de précontrainte.

10. Accouplement de sécurité selon l'une quelconque des revendications précédentes, **caractérisé en ce que** les première et deuxième moitiés d'accouplement (4, 6) sont pourvues d'une bride droite.

11. Accouplement de sécurité selon l'une quelconque des revendications 1 à 9, **caractérisé en ce que** les première et deuxième moitiés d'accouplement (4, 6) sont pourvues d'une bride conique.

12. Accouplement de sécurité selon l'une quelconque des revendications 1 à 10, **caractérisé en ce que** la première moitié d'accouplement (4) est pourvue d'une bride droite (10) et la deuxième moitié d'accouplement (6) est pourvue d'une bride conique (11).

13. Accouplement de sécurité selon l'une quelconque des revendications précédentes, **caractérisé en ce que** la bague de blocage (8) a une forme complémentaire des parties de bride des moitiés d'accouplement (4, 6).

14. Accouplement de sécurité selon l'une quelconque des revendications précédentes, **caractérisé en ce que** la bague de blocage (8) comporte au moins trois segments mutuellement mobiles (12).

15. Accouplement de sécurité selon la revendication 14,
**caractérisé en ce que** la bague de blocage (8) comporte quatre segments mutuellement mobiles (12).

16. Accouplement de sécurité selon l'une quelconque des revendications 5 à 15, **caractérisé en ce que** l'agencement de ressorts (32) comprend des éléments élastiques réglables (34) agissant entre les extrémités contiguës des segments mutuellement mobiles (12) de la bague de blocage (8).

17. Accouplement de sécurité selon la revendication 16, **caractérisé en ce que** chaque élément élastique (34) est adapté pour agir tangentiellement entre deux segments de bague (12).

18. Accouplement de sécurité selon l'une quelconque des revendications précédentes, **caractérisé en ce que** lorsque les segments (12) de la bague de blocage sont dans la première position, les éléments d'accouplement (20, 22) enfourchent les brides (10, 11) afin de porter en crabot contre les parties de bride des moitiés d'accouplement (4, 6).

19. Accouplement de sécurité selon la revendication 18, **caractérisé en ce que** les éléments d'accouplement consistent en un premier cordon annulaire (20) à bord droit (24) et un deuxième cordon annulaire (22) à bord biseauté (26).

20. Accouplement de sécurité selon la revendication 19, **caractérisé en ce que** les cordons annulaires (20, 22) sont reliés l'un à l'autre au moyen d'une âme (18).

21. Dispositif d'évacuation des gaz d'échappement pour véhicules à moteur, muni d'un canal d'évacuation comprenant une ligne flexible sous la forme d'un tuyau d'aspiration qui peut être connecté au tube d'échappement du véhicule à moteur à l'aide d'un agencement de pince qui peut être manoeuvré entre une position active et une position inactive qui dépend de la position du véhicule à moteur par rapport au canal d'évacuation, **caractérisé en ce que** le tuyau d'aspiration peut être divisé au moyen d'un accouplement de sécurité (2) qui présente les caractéristiques décrites dans l'une quelconque des revendications précédentes.
